# EUROPEAN PATENT SPECIFICATION

(11) **EP 3 091 800 B1**
(45) Date of publication and mention of the grant of the patent: **02.01.2019**
(21) Application number: 14800550.7
(22) Date of filing: 10.06.2014
(51) Int. Cl.: H04L 5/00, H04W 72/04

(54) **METHOD AND APPARATUS FOR ALLOCATING RESOURCE TO LTE CELL**
VERFAHREN UND VORRICHTUNG ZUR ZUWEISUNG EINER RESSOURCE AN EINE LTE-ZELLE
PROCÉDÉ ET APPAREIL D'ATTRIBUTION D'UNE RESSOURCE À UNE CELLULE LTE

(30) Priority: 30.12.2013 CN 201310745645
(43) Date of publication of application: 09.11.2016
(73) Proprietor: ZTE Corporation, Shenzhen, Guangdong 518057 (CN)
(72) Inventor: YIN, Xiaoxue, Shenzhen Guangdong 518057 (CN)
(74) Representative: Lavoix
(86) International application number: PCT/CN2014/079637
(87) International publication number: WO 2014/187413

(56) References cited:
- CN-A- 101 389 136
- CN-A- 101 472 339
- CN-A- 102 387 554
- CN-A- 102 387 554
- US-A1- 2008 233 966

## Description

### TECHNICAL FIELD

The present disclosure relates to the field of communications, and in particular to a method and apparatus for allocating a resource to a Long Term Evolution (LTE) cell, a base station and a storage medium.

### BACKGROUND

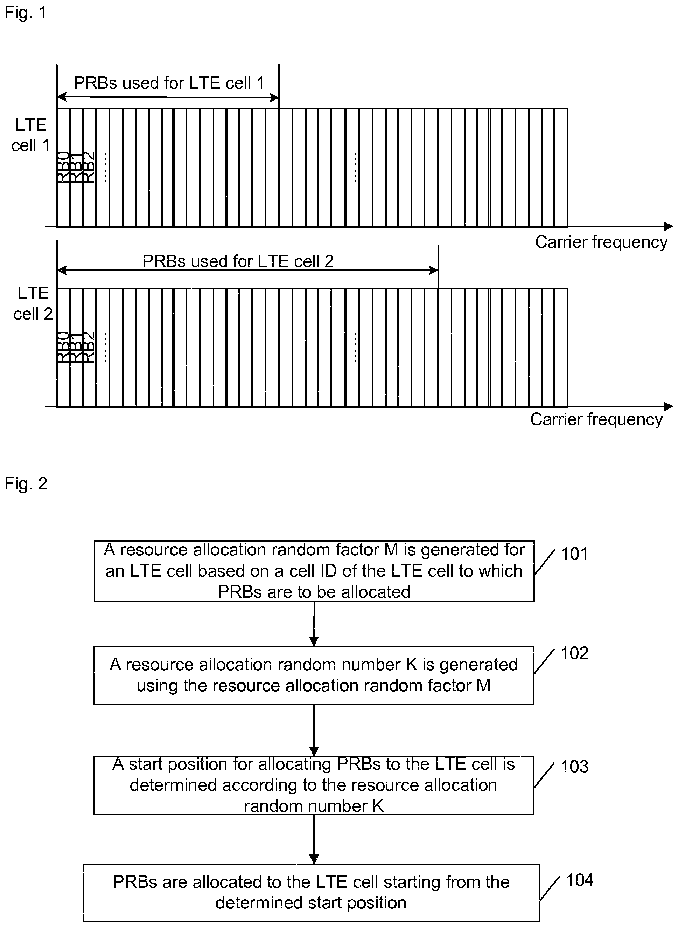

With the development of a wireless broadband communication technology, how to solve the interference problem in a wireless system has become a current hotspot. An LTE system, as a mainstream technology for wireless communication, adopts same-frequency networking, and the interference problem is one of the inevitable problems. In a conventional LTE wireless communication system, a wireless resource allocation manner takes a Physical Resource Block (PRB) as a unit, and each cell has the same PRB allocation manner in which a PRB is allocated to a high frequency band by taking a lowest frequency as a start position of the PRB, thereby causing overlapping of inter-cell low-frequency PRBs. As shown in Fig. 1, RB0, RB1, RB2 and the like are overlapped among PRBs allocated to an LTE cell 1 and an LTE cell 2. Due to the overlapping, pieces of marginal User Equipment (UE) between several adjacent cells will strongly interfere with one another, thereby influencing the performance of an entire network.

The document US 2008/233966A1 discloses a novel and useful method and system for resource allocation in OFDM communication system. The mechanism reduces inter-cell interference by randomizing the inter-cell interference experienced in each cell. The mechanism effectively spreads the resource allocation in each cell in a random manner resulting in statistical-like inter-cell interference behaviour. In many cases, use of the mechanism is sufficient to obviate the need for frequency planning between cells. A formula or hardware permutation machine is used to generate a random list of indices. The indices are then used to assign user data to the system resources. One or more parameters defining the random index generator at the transmitter are forwarded to the receiver to enable the local generation of an exact copy of the list of indices generated at the transmitter, thus enabling the DL and UL at the receiver while minimizing the required control channel signaling.

The document CN 102387554A discloses a method for allocating inter-cell interference coordination (ICIC) resource. The method comprises the following steps: a certain number of neighboring cells are taken as a cell group through a public management entity, and resource is reserved as round-robin resource of the cell group; when the cells in the cell group report edge resource insufficiency to the public management entity, the public management entity indicates all the cells in the cell group to start an algorithm; all the cells in the cell group calculate the round-robin sequence of the round-robin resource among the cells according to the algorithm; and the cells use the round-robin resource according to the round-robin sequence. The method has the beneficial effects of realizing the dynamic interference coordination algorithm without information interaction at an interface X2 and preventing the situations that new inter-cell interference among the neighboring cells is possibly caused by load information interaction and a static resource partitioning mode cannot adapt to unbalanced inter-cell edge resource; and meanwhile the public management entity is configured simply, and calculation based on the algorithm is mainly completed in a base station with small computation quantity.

### SUMMARY

In view of this, the embodiments of the present disclosure provide a method and apparatus for resource allocation to an LTE cell, a base station and a storage medium, which can be used to solve the problem that resource blocks are overlapped when a conventional resource allocation method is adopted in a process of allocating PRBs to each cell in an LTE system, as captured in the appended claims.

According to a first aspect, an embodiment of the present disclosure provides a method for resource allocation to an LTE cell, which may include that:
a resource allocation random factor M is generated for the LTE cell based on a cell identification number (cell ID) of the LTE cell;
a resource allocation random number K is generated using the resource allocation random factor M, the resource allocation random number K being greater than or equal to 0 and being less than or equal to N1-N2, the N1 being a total number of PRBs corresponding to a system bandwidth of an LTE system, and the N2 being a total number of PRBs needing to be scheduled to the LTE cell currently;
a start position for allocating PRBs to the LTE cell is determined according to the resource allocation random number K; and PRBs are allocated to the LTE cell from the determined start position.

Preferably, the step that the resource allocation random factor M is generated for the LTE cell based on the cell ID of the LTE cell may include that:
the cell ID of the LTE cell is directly taken as the resource allocation random factor M of the LTE cell; or
a sum of the cell ID of the LTE cell and a system frame number of the LTE system at a current Transmission Time Interval (TTI) are taken as the resource allocation random factor M of the LTE cell; or
a sum of the cell ID of the LTE cell and a system subframe number of the LTE system at the current TTI are taken as the resource allocation random factor M of the LTE cell; or
a sum of the cell ID of the LTE cell and the system frame number and system subframe number of the LTE system at the current TTI are taken as the resource allocation random factor M of the LTE cell.

Preferably, the step that the resource allocation random number K is generated using the resource allocation random factor M may include that:
a pseudorandom sequence is generated by taking the resource allocation random factor M as a seed; and
a number is selected from the pseudorandom sequence and taken as the resource allocation random number K.

Preferably, when PRBs are allocated to an uplink physical channel of the LTE cell, the resource allocation random number K may be a start position for allocating the PRBs to the uplink physical channel of the LTE cell, wherein the total number N1 of PRBs may be a total number of PRBs corresponding to an uplink system bandwidth of the LTE system, and the total number N2 of PRBs may be a total number of uplink PRBs needing to be scheduled to the LTE cell currently;
correspondingly, a number may be selected from the pseudorandom sequence as the resource allocation random number K, K=Rand[M,(0,N1-N2)];
where Rand[] may be a random-number generation function; and the Rand[M,(0,N1-N2)] may be generating a random number between 0 and N1-N2, and the resource allocation random factor M may be taken as a seed for generating a random sequence from which the random number is generated.

Preferably, when PRBs are allocated to a downlink physical channel of the LTE cell, a position of a downlink resource unit corresponding to a position of a PRB where the resource allocation random number K is located may be taken as a start position for allocating downlink PRBs to the LTE cell, wherein the total number N1 of PRBs may be a total number of PRBs corresponding to a downlink system bandwidth of the LTE system, and the total number N2 of PRBs may be a total number of downlink PRBs needing to be scheduled to the LTE cell currently;
correspondingly, a number may be selected from the pseudorandom sequence as the resource allocation random number K, K=H*floor[Rand(M,(0,N1-N2))/H];
where the floor[] may represent rounding down; the Rand() may be a random-number generation function; the Rand(M,(0,N1-N2)) may be generating a random number between 0 and N1-N2, and the resource allocation random factor M may be taken as a seed for generating a random sequence from which the random number is generated; and the H may be a size of the downlink resource unit corresponding to the downlink system bandwidth of the LTE system.

Preferably, when the PRBs are allocated to the downlink physical channel of the LTE cell according to a PRB continuous allocation rule, the step that the PRBs are allocated to the LTE cell from the start position may further include that:
when it is determined that N1-K-J<N2, J being a total number of occupied PRBs, an available PRB segment is searched for in a direction from low frequency to high frequency starting from a position of a lowest-frequency PRB, and a start position of the downlink resource unit corresponding to a start position of the PRB segment is taken as a new start position for allocating the PRBs to the downlink physical channel of the cell.

According to a second aspect, an embodiment of the present disclosure provides an apparatus for resource allocation to an LTE cell, which may include: a random factor generation module, a random number acquisition module, a position determination module and a resource allocation module, wherein
the random factor generation module may be configured to generate, based on a cell ID of the LTE cell, a resource allocation random factor M for the LTE cell;
the random number acquisition module may be configured to generate a resource allocation random number K using the resource allocation random factor M, the resource allocation random number K being greater than or equal to 0 and being less than or equal to N1-N2, where the N1 being a total number of PRBs corresponding to a system bandwidth of an LTE system, and the N2 being a total number of PRBs needing to be scheduled to the LTE cell currently;
the position determination module may be configured to determine a start position for allocating PRBs to the LTE cell according to the resource allocation random number K; and
the resource allocation module may be configured to allocate PRBs to the LTE cell from the determined start position.

Preferably, the random factor generation module may be configured to directly take the cell ID of the LTE cell as the resource allocation random factor M of the LTE cell; or
the random factor generation module may be configured to take a sum of the cell ID of the LTE cell and a system frame number of the LTE system at a current TTI as the resource allocation random factor M of the LTE cell; or
the random factor generation module may be configured to take a sum of the cell ID of the LTE cell and a system subframe number of the LTE system at the current TTI as the resource allocation random factor M of the LTE cell; or
the random factor generation module may be configured to take a sum of the cell ID of the LTE cell and the system frame number and system subframe number of the LTE system at the current TTI as the resource allocation random factor M of the LTE cell.

Preferably, the random number acquisition module may include an initialization sub-module and a random number generation sub-module, wherein
the initialization sub-module may be configured to initialize a pre-set random sequence using the resource allocation random factor M, namely generate a pseudorandom sequence by taking the resource allocation random factor M as a seed; and
the random number generation sub-module may be configured to select a number from the pseudorandom sequence as the resource allocation random number K.

Preferably, when PRBs are allocated to an uplink physical channel of the LTE cell, the position determination module may be configured to determine the resource allocation random number K as a start position for allocating the PRBs to the uplink physical channel of the LTE cell, wherein the total number N1 of PRBs may be a total number of PRBs corresponding to an uplink system bandwidth of the LTE system, and the total number N2 of PRBs may be a total number of uplink PRBs needing to be scheduled to the LTE cell currently;
correspondingly, the random number generation sub-module may be configured to select a number from the pseudorandom sequence as the resource allocation random number K, K=Rand[M,(0,N1-N2)];
where the Rand[] may be a random-number generation function; and Rand[M,(0,N1-N2)] may be generating a random number between 0 and N1-N2, and the resource allocation random factor M may be taken as a seed for generating a random sequence where the random number is generated.

Preferably, when PRBs are allocated to a downlink physical channel of the LTE cell, the position determination module may be configured to determine a position of a downlink resource unit corresponding to a position of a PRB where the resource allocation random number K is located as a start position for allocating downlink PRBs to the LTE cell, wherein the total number N1 of PRBs may be a total number of PRBs corresponding to a downlink system bandwidth of the LTE system, and the total number N2 of PRBs may be a total number of downlink PRBs needing to be scheduled to the LTE cell currently;
correspondingly, the random number generation sub-module may be configured to select a number from the pseudorandom sequence as the resource allocation random number K, K=H*floor[Rand(M,(0,N1-N2))/H];
floor[] may represent rounding down; Rand() may be a random-number generation function; Rand(M,(0,N1-N2)) may be generating a random number between 0 and N1-N2, and the resource allocation random factor M may be taken as a seed for generating a random sequence from which the random number is generated; and H may be a size of the downlink resource unit corresponding to the downlink system bandwidth of the LTE system.

Preferably, the resource allocation apparatus may further include a judgement module, wherein
when the resource allocation module allocates the PRBs to the downlink physical channel of the LTE cell according to a PRB continuous allocation rule, the judgement module may be configured to judge that N1-K-J<N2 in a process that the resource allocation module allocates the PRBs to the LTE cell from the start position, the J may be a total number of occupied PRBs, and search for an available PRB segment in a direction from low frequency to high frequency starting from a position of a lowest-frequency PRB; and
correspondingly, the position determination module may be further configured to take a start position of the downlink resource unit corresponding to a start position of the PRB segment as a new start position for allocating the PRBs to the downlink physical channel of the cell.

According to a third aspect, an embodiment of the present disclosure also provides a computer readable storage medium having stored therein computer executable instructions for executing the method for resource allocation to an LTE cell.

The embodiments of the present disclosure have the beneficial effects as follows:
according to the resource allocation method and apparatus for an LTE cell, the base station and the storage medium provided by the embodiments of the present disclosure, a resource allocation random factor M is generated for the LTE cell based on the cell ID of the LTE cell to which a resource is to be allocated; then, the resource allocation random number K is generated using the resource allocation random factor M, the generated resource allocation random number K being greater than or equal to 0 and being less than or equal to N1-N2, the N1 being the total number N1 of PRBs corresponding to the system bandwidth of the LTE system, and the N2 being the total number of PRBs needing to be scheduled to the LTE cell currently; the start position for allocating PRBs to the LTE cell is determined according to the resource allocation random number K; and the PRBs are allocated to the LTE cell from the start position. It can be seen that according to the technical solutions provided by the embodiments of the present disclosure, a PRB resource is allocated to each LTE cell randomly. Thus, the probability of overlapping of the PRBs between all LTE cells can be greatly reduced, the probability of mutual interference between adjacent cells can be reduced, and the performance of an entire network is improved, thereby further increasing the satisfaction of user experience.

### BRIEF DESCRIPTION OF THE DRAWINGS

Fig. 1 is a conventional diagram of allocation of PRBs between LTE cells;
Fig. 2 is a flow diagram of a method for allocating a resource to an LTE cell according to embodiment 1 of the present disclosure;
Fig. 3 is a flow diagram of generation of a random number K of resource allocation according to embodiment 1 of the present disclosure;
Fig. 4 is a flow diagram of a method for allocating a resource to an uplink physical channel of an LTE cell according to embodiment 1 of the present disclosure;
Fig. 5 is a flow diagram of a method for allocating a resource to a downlink physical channel of an LTE cell according to embodiment 1 of the present disclosure;
Fig. 6-1 is a structure diagram 1 of a apparatus for allocating a resource to an LTE cell according to embodiment 2 of the present disclosure;
Fig. 6-2 is a composition structure diagram of a random number acquisition module in an apparatus for resource allocation to an LTE cell according to embodiment 2 of the present disclosure;
Fig. 7 is a structure diagram 2 of an apparatus for resource allocation to an LTE cell according to embodiment 2 of the present disclosure;
Fig. 8 is a structure diagram of a base station according to embodiment 3 of the present disclosure; and
Fig. 9 is a diagram of allocation of PRBs between LTE cells according to embodiment 3 of the present disclosure.

### DETAILED DESCRIPTION

In the embodiments of the present disclosure, PRB resources are allocated to each LTE cell randomly. Thus, the probability of overlapping of the PRBs among all LTE cells can be greatly reduced, the probability of mutual interference between adjacent cells can be reduced, and the performance of an entire network is improved, and the satisfaction of user experience is further increased. The technical solutions of the present disclosure are further described below with reference to specific embodiments and the drawings in detail.

### Embodiment 1

As shown in Fig. 2, a method for resource allocation to an LTE cell provided by the embodiment includes the steps as follows.

Step 101: Based on a cell ID of an LTE cell to which PRBs are to be allocated, a random factor M of resource allocation is generated for the LTE cell.

Step 102: A random number K of the resource allocation is generated using the random factor M of the resource allocation.

Here, the random number K of the resource allocation is greater than or equal to 0 and is less than or equal to N1-N2, N1 being a total number of PRBs corresponding to a system bandwidth of an LTE system, and N2 being a total number of PRBs needing to be scheduled to the LTE cell currently.

Step 103: A start position for allocating PRBs to the LTE cell is determined according to the random number K of the resource allocation.

Step 104: PRBs are allocated to the LTE cell starting from the determined start position.

In the embodiment, Step 101 or Step 102 may further include the step of acquiring the total number N1 of PRBs corresponding to the system bandwidth of the LTE system and/or acquiring the total number N2 of PRBs currently needing to be scheduled to the LTE cell.

In Step 101, when the resource allocation random factor M is generated for the LTE cell based on the cell ID of the LTE cell, any parameters relevant to a wireless system can be adopted theoretically as long as it can be guaranteed that resource allocation random factors M generated for all cells are different as far as possible. The example descriptions are executed below in following multiple manners, but it shall be understood that available manners may include, but not limited to, the following multiple manners.

The first manner refers to directly taking the cell ID of the LTE cell as the resource allocation random factor M of the LTE cell.

The second manner refers to taking the sum of the cell ID of the LTE cell and a system frame number sysFn of the LTE system at a current TTI as the resource allocation random factor M of the LTE cell.

The third manner refers to taking the sum of the cell ID of the LTE cell and a system subframe number subSysFn of the LTE system at the current TTI as the resource allocation random factor M of the LTE cell.

The fourth manner refers to taking the sum of the cell ID of the LTE cell and the system frame number sysFn and system subframe number subSysFn of the LTE system at the current TTI as the resource allocation random factor M of the LTE cell.

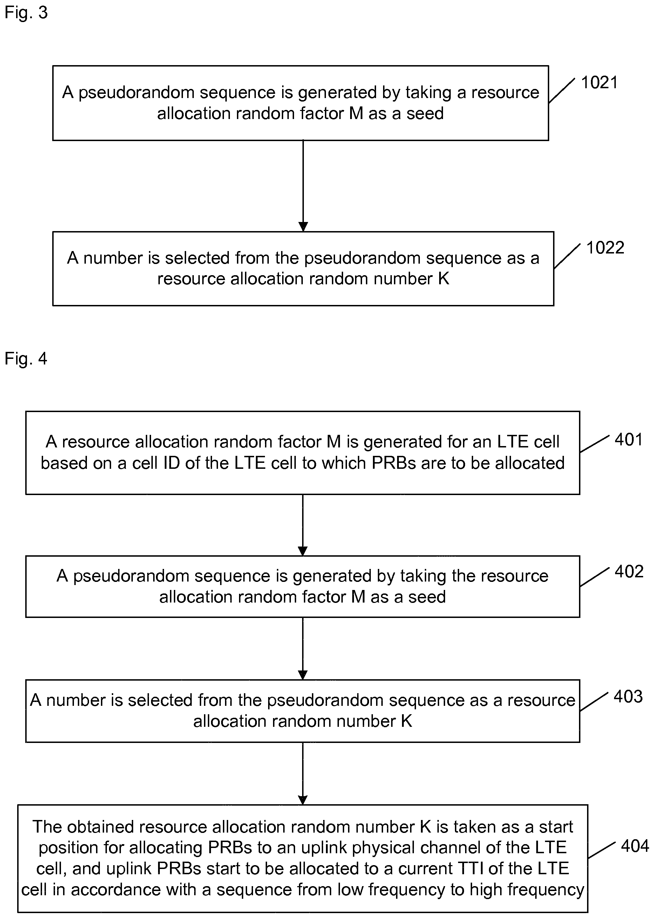

As shown in Fig. 3, the step 102 includes the steps as follows.

Step 1021: A pseudorandom sequence is generated by taking the resource allocation random factor M as a seed.

Here, the step 1021 refers to initializing a pre-set random sequence using the resource allocation random factor M.

Step 1022: A number is selected from the pseudorandom sequence as the resource allocation random number K.

Here, the resource allocation random number K is greater than or equal to 0 and is less than or equal to N1-N2.

In the embodiment, allocation of a resource to the LTE cell includes allocation of PRBs to an uplink physical channel (UL PDSCH) and a downlink physical channel (DL PDSCH) of the LTE cell. The allocation processes for the uplink physical channel and the downlink physical channel are described below respectively.

When PRBs are allocated to the uplink physical channel of the LTE cell, the total number N1 of acquired PRBs is a total number of PRBs corresponding to an uplink system bandwidth of the LTE system, and the total number N2 of acquired PRBs is a total number of PRBs needing to be scheduled to the LTE cell currently, for example, within the current TTI. As shown in Fig. 4, the process of allocating the PRBs to the uplink physical channel of the LTE cell includes the steps as follows.

Step 401: Based on a cell ID of an LTE cell to which PRBs are to be allocated, a resource allocation random factor M is generated for the LTE cell.

Here, M=cell ID+sysFn+subSysFn.

Step 402: A pseudorandom sequence is generated by taking the resource allocation random factor M as a seed.

Here, the step 402 refers to initializing a pre-set random sequence using the resource allocation random factor M.

Step 403: A number is selected from the pseudorandom sequence as a resource allocation random number K.

Here, K=Rand[M,(0,N1-N2)],
where Rand[] is a random-number generation function; and Rand[M,(0,N1-N2)] is generating a random number between 0 and N1-N2, and a random sequence from which the random number is generated takes the resource allocation random factor M as a seed.

Step 404: The obtained resource allocation random number K is taken as a start position for allocating the PRBs to the uplink physical channel of the LTE cell, and uplink PRBs start to be allocated to the LTE cell at the current TTI in accordance with a sequence from low frequency to high frequency.

In the embodiment, the PRBs can be allocated to the uplink physical channels of all LTE cells of the LTE system in accordance with the above manners, and within each TTI, the start positions for allocating the PRBs to the uplink physical channels of all LTE cells are randomly staggered, so that inter-cell interference can be reduced.

When the PRBs are allocated to the downlink physical channel of the LTE cell, the total number N1 of acquired PRBs is a total number of PRBs corresponding to a downlink system bandwidth of the LTE system, and the total number N2 of acquired PRBs is a total number of PRBs needing to be scheduled to the LTE cell currently, for example, within the current TTI.

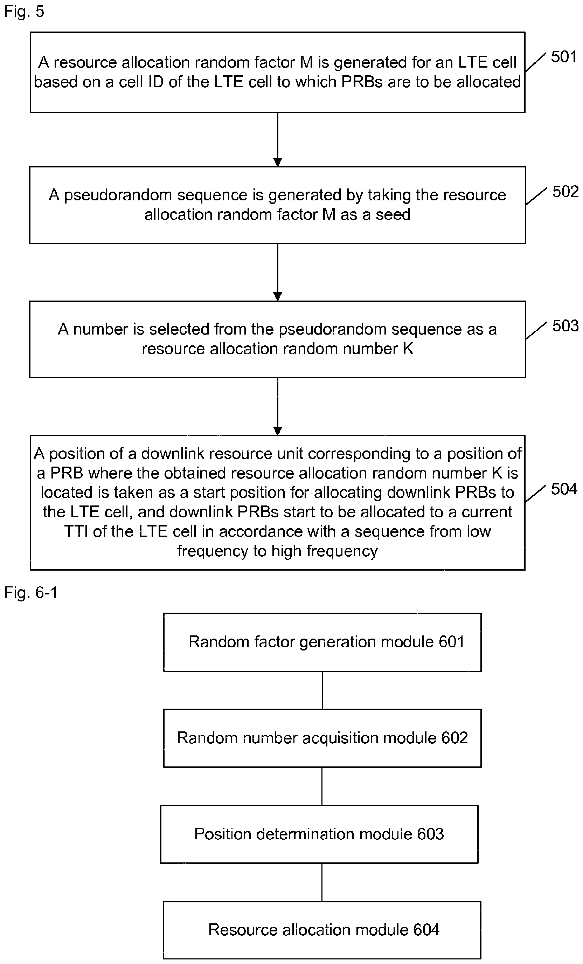

At this time, the method also includes that: a size H of a downlink resource unit corresponding to the downlink system bandwidth of the LTE system is acquired. As shown in Fig. 5, the process of allocating the PRBs to the downlink physical channel of the LTE cell includes the steps as follows.

Step 501: Based on a cell ID of an LTE cell to which PRBs are to be allocated, a resource allocation random factor M is generated for the LTE cell.

Here, M=cell ID+sysFn+subSysFn.

Step 502: A pseudorandom sequence is generated by taking the resource allocation random factor M as a seed.

Here, Step 502 refers to initializing a pre-set random sequence using the resource allocation random factor M.

Step 503: A number is selected from the pseudorandom sequence as a resource allocation random number K.

Here, K=H*floor[Rand(M,(0,N1-N2))/H], where
floor[] represents rounding down; Rand() is a random-number generation function; Rand(M,(0,N1-N2)) is generating a random number between 0 and N1-N2, and a random sequence from which the random number is generated takes the resource allocation random factor M as a seed; and H is the size of the downlink resource unit corresponding to the downlink system bandwidth of the LTE system.

Step 504: A position of the downlink resource unit corresponding to a position of a PRB where the obtained resource allocation random number K is located is taken as a start position for allocating downlink PRBs to the LTE cell, and downlink PRBs start to be allocated to the LTE cell at the current TTI in accordance with a sequence from low frequency to high frequency.

In the embodiment, the PRBs can be allocated to the downlink physical channels of all LTE cells of the LTE system in accordance with the above manners, and within each TTI, the start positions for allocating the PRBs to the downlink physical channels of all LTE cells are randomly staggered, so that inter-cell interference can be reduced.

In the embodiment, the above manners are applicable to allocation of the PRBs to the downlink physical channel of the LTE cell based on various allocation manners such as a Localized Virtual Resource Blocks (LVRB) allocation manner, a Type0/Type1 allocation manner, and the like. However, when the PRBs are allocated to the downlink physical channel of the LTE cell according to a rule of continuous allocation of PRBs (for example, the LVRB allocation manner is adopted according to the rule), the process of allocating the PRBs to the LTE cell from the determined start position in the embodiment further includes that:
when it is determined that N1-K-J<N2, an available PRB segment is searched for in a direction from low frequency to high frequency starting from a position of a lowest-frequency PRB, and a start position of the downlink resource unit corresponding to a start position of the PRB segment is taken as a new start position for allocating the PRBs to the downlink physical channel of the cell, wherein J is a total number of occupied PRBs.

### Embodiment 2

As shown in Fig. 6-1, a apparatus for resource allocation to an LTE cell provided by the embodiment includes a random factor generation module 601, a random number acquisition module 602, a position determination module 603 and a resource allocation module 604, wherein
the random factor generation module 601 is configured to generate, based on a cell ID of an LTE cell to which a resource is to be allocated, a resource allocation random factor M for the LTE cell;
the random number acquisition module 602 is configured to generate a resource allocation random number K using the resource allocation random factor M, the resource allocation random number K being greater than or equal to 0 and being less than or equal to N1-N2, N1 being a total number N1 of PRBs corresponding to a system bandwidth of an LTE system, and N2 being a total number of PRBs needing to be scheduled to the LTE cell currently;
the position determination module 603 is configured to determine a start position for allocating PRBs to the LTE cell according to the resource allocation random number K; and
the resource allocation module 604 is configured to allocate PRBs to the LTE cell from the start position.

When the random factor generation module generates the resource allocation random factor M for the LTE cell based on the cell ID of the LTE cell, any parameters relevant to a wireless system can be adopted theoretically as long as it can be guaranteed that resource allocation random factors M generated for all cells are different as far as possible. The example descriptions are illustrated below in following multiple manners, but it shall be understood that available manners may include, but not limited to, the following multiple manners.

The first manner refers to directly taking the cell ID of the LTE cell as the resource allocation random factor M of the LTE cell.

The second manner refers to taking the sum of the cell ID of the LTE cell and a system frame number sysFn of the LTE system at a current TTI as the resource allocation random factor M of the LTE cell.

The third manner refers to taking the sum of the cell ID of the LTE cell and a system subframe number subSysFn of the LTE system at the current TTI as the resource allocation random factor M of the LTE cell.

The fourth manner refers to taking the sum of the cell ID of the LTE cell and the system frame number sysFn and system subframe number subSysFn of the LTE system at the current TTI as the resource allocation random factor M of the LTE cell.

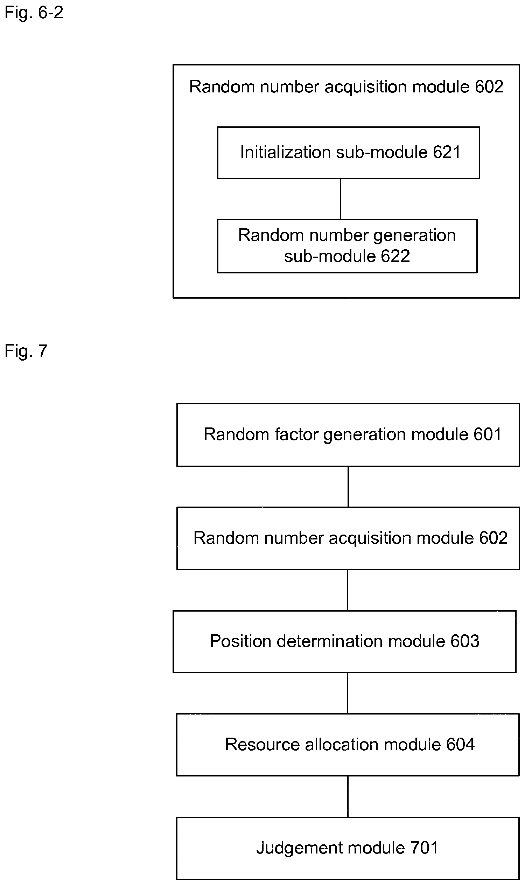

As shown in Fig. 6-2, the random number acquisition module 602 may further include an initialization sub-module 621 and a random number generation sub-module 622, wherein
the initialization sub-module 621 is configured to initialize a pre-set random sequence using the resource allocation random factor M, and generate a pseudorandom sequence by taking the resource allocation random factor M as a seed; and
the random number generation sub-module 622 is configured to select a number from the pseudorandom sequence as the resource allocation random number K.

In the embodiment, when PRBs are allocated to an uplink physical channel of the LTE cell, the total number N1 of PRBs is a total number of PRBs corresponding to an uplink system bandwidth of the LTE system, and the total number N2 of PRBs is a total number of uplink PRBs needing to be scheduled to the LTE cell currently; the position determination module determines the resource allocation random number K as a start position for allocating the PRBs to the uplink physical channel of the LTE cell;
correspondingly, the random number generation sub-module 622 is configured to select a number from the pseudorandom sequence as the resource allocation random number K, K=Rand[M,(0,N1-N2)];
Rand[] is a random-number generation function; and Rand[M,(0,N1-N2)] is a generating random number between 0 and N1-N2, and a random sequence from which the random number is generated takes the resource allocation random factor M as a seed.

In the embodiment, when PRBs are allocated to a downlink physical channel of the LTE cell, the total number N1 of PRBs is a total number of PRBs corresponding to a downlink system bandwidth of the LTE system, and the total number N2 of PRBs is a total number of downlink PRBs needing to be scheduled to the LTE cell currently. The position determination module 603 is configured to determine a position of a downlink resource unit corresponding to a position of a PRB where the resource allocation random number K is located as a start position for allocating downlink PRBs to the LTE cell.

Correspondingly, the random number generation sub-module 622 is configured to select a number from the pseudorandom sequence as the resource allocation random number K, K=H*floor[Rand(M,(0,N1-N2))/H];
floor[] represents rounding down; Rand() is a random-number generation function; Rand(M,(0,N1-N2)) is generating a random number between 0 and N1-N2, and the resource allocation random factor M is taken as a seed for generating a random sequence from which the random number is generated; and H is a size of the downlink resource unit corresponding to the downlink system bandwidth of the LTE system.

In the embodiment, the above manners are applicable to allocation of the PRBs to the downlink physical channel of the LTE cell based on various allocation manners such as an LVRB allocation manner, a Type0/Type1 allocation manner, and the like.

However, when the PRBs are allocated to the downlink physical channel of the LTE cell by following a PRB continuous allocation rule (for example, the LVRB allocation manner is adopted according to the rule). As shown in Fig. 7, the resource allocation apparatus in the embodiment further includes a judgement module 701, wherein
the judgement module 701 is configured to determine that N1-K-J<N2 in the process that the resource allocation module allocates the PRBs to the LTE cell from the start position, and search for an available PRB segment in a direction from low frequency to high frequency starting from a position of a lowest-frequency PRB; and
correspondingly, the position determination module 603 is further configured to take a start position of the downlink resource unit corresponding to a start position of the PRB segment as a new start position for allocating the PRBs to the downlink physical channel of the cell, J being a total number of occupied PRBs.

### Embodiment 3

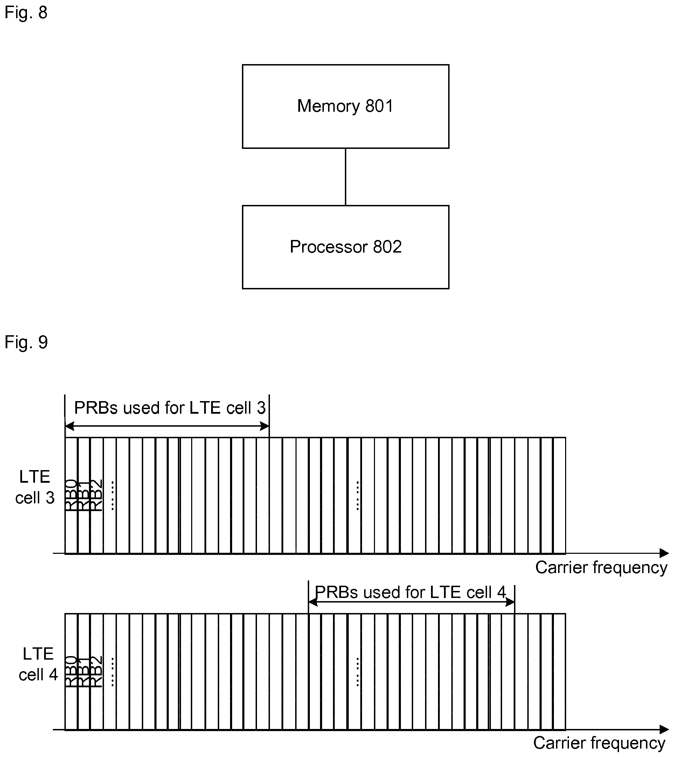

As shown in Fig. 8, a base station provided by the embodiment includes a memory 801 and a processor 802 coupled to the memory 801, wherein
the memory 801 is configured to store executable instructions, when the executable instructions are executed, to make the processor capable of:
generating, based on a cell ID of an LTE cell to which a resource is to be allocated, a resource allocation random factor M for the LTE cell;
generating a resource allocation random number K using the resource allocation random factor M, the resource allocation random number K being greater than or equal to 0 and being less than or equal to N1-N2, N1 being a total number N1 of PRBs corresponding to a system bandwidth of an LTE system, and N2 being a total number of PRBs needing to be scheduled to the LTE cell currently;
determining a start position for allocating PRBs to the LTE cell according to the resource allocation random number K; and
allocating PRBs to the LTE cell from the start position.

The processor 802 executes the executable instructions so as to randomly allocate a PRB resource to each LTE cell, so that the probability of overlapping of PRBs among all LTE cells can be greatly reduced. Fig. 9 shows a diagram of PRBs allocated to an LTE cell 3 and an LTE cell 4 through the above step. It can be seen from Fig. 9 that overlapped PRBs do not exist between the LTE cell 3 and the LTE cell 4. Thus, the probability of mutual interference between the two cells can be reduced, and the performance of an entire network is improved, thereby further increasing the satisfaction of user experience.

In the above step, when the resource allocation random factor M is generated for the LTE cell based on the cell ID of the LTE cell, any parameters relevant to a wireless system can be adopted theoretically as long as it can be guaranteed that resource allocation random factors M generated for all cells are different as far as possible. The example descriptions are executed below in following multiple manners, but it shall be understood that available manners may include, but not limited to, the following multiple manners.

The first manner refers to directly taking the cell ID of the LTE cell as the resource allocation random factor M of the LTE cell.

The second manner refers to taking the sum of the cell ID of the LTE cell and a system frame number sysFn of the LTE system at a current TTI as the resource allocation random factor M of the LTE cell.

The third manner refers to taking the sum of the cell ID of the LTE cell and a system subframe number subSysFn of the LTE system at the current TTI as the resource allocation random factor M of the LTE cell.

The fourth manner refers to taking the sum of the cell ID of the LTE cell and the system frame number sysFn and system subframe number subSysFn of the LTE system at the current TTI as the resource allocation random factor M of the LTE cell.

In the above step, the process of generating the resource allocation random number K using the resource allocation random factor M includes:
initializing a pre-set random sequence using the resource allocation random factor M, and generating a pseudorandom sequence by taking the resource allocation random factor M as a seed; and
selecting a number from the pseudorandom sequence as the resource allocation random number K, the resource allocation random number K being greater than or equal to 0 and being less than or equal to N1-N2.

In the embodiment, allocation of resources to the LTE cell includes allocation of PRBs to an uplink physical channel (UL PDSCH) and a downlink physical channel (DL PDSCH) of the LTE cell. The allocation processes for the uplink physical channel and the downlink physical channel are described below respectively.

When the PRBs are allocated to the uplink physical channel of the LTE cell, the total number N1 of acquired PRBs is a total number of PRBs corresponding to an uplink system bandwidth of the LTE system, and the total number N2 of acquired PRBs is a total number of PRBs needing to be scheduled to the LTE cell currently, for example, within the current TTI. The process of allocating the PRBs to the uplink physical channel of the LTE cell includes:
generating a resource allocation random factor M for the LTE cell based on a cell ID of an LTE cell to which PRBs are to be allocated, wherein M=cell ID+sysFn+subSysFn in this step;
initializing a pre-set random sequence using the resource allocation random factor M, and generating a pseudorandom sequence by taking the resource allocation random factor M as a seed;
selecting a number from the pseudorandom sequence as a resource allocation random number K, wherein specifically,
K=Rand[M,(0,N1-N2)],
where Rand[] is a random-number generation function, Rand[M,(0,N1-N2)] is a generating a random number between 0 and N1-N2, and the resource allocation random factor M is taken as a seed for generating a random sequence from which the random number is generated; and
taking the obtained resource allocation random number K as a start position for allocating the PRBs to the uplink physical channel of the LTE cell, and starting to allocate uplink PRBs to the LTE cell at the current TTI in accordance with a sequence from low frequency to high frequency.

In the embodiment, the PRBs can be allocated to the uplink physical channels of all LTE cells of the LTE system in accordance with the above manners, and within each TTI, the start positions for allocating the PRBs to the uplink physical channels of all LTE cells are randomly staggered, so that inter-cell interference can be reduced.

When the PRBs are allocated to the downlink physical channel of the LTE cell, the total number N1 of acquired PRBs is a total number of PRBs corresponding to a downlink system bandwidth of the LTE system, and the total number N2 of acquired PRBs is a total number of PRBs needing to be scheduled to the LTE cell currently, for example, within the current TTI.

At this time, the process also includes acquiring a size H of a downlink resource unit corresponding to the downlink system bandwidth of the LTE system. At this time, the process of allocating the PRBs to the downlink physical channel of the LTE cell includes:
generating a resource allocation random factor M for the LTE cell based on a cell ID of the LTE cell to which PRBs are to be allocated, wherein in the step, M=cell ID+sysFn+subSysFn;
initializing a pre-set random sequence using the resource allocation random factor M, and generating a pseudorandom sequence by taking the resource allocation random factor M as a seed;
selecting a number from the pseudorandom sequence as a resource allocation random number K, wherein specifically,
K=H*floor[Rand(M,(0,N1-N2))/H], where
floor[] represents rounding down; Rand() is a random-number generation function; Rand(M,(0,N1-N2)) is generating a random number between 0 and N1-N2, and the resource allocation random factor M is taken as a seed for generating a random sequence from which the random number is generated, and H is the size of the downlink resource unit corresponding to the downlink system bandwidth of the LTE system; and
A position of the downlink resource unit corresponding to a position of a PRB where the obtained resource allocation random number K is located is taken as a start position for allocating downlink PRBs to the LTE cell, and downlink PRBs starts to be allocated to the LTE cell at the current TTI in accordance with a sequence from low frequency to high frequency.

In the embodiment, the PRBs can be allocated to the downlink physical channels of all LTE cells of the LTE system in accordance with the above manners, and within each TTI, the start positions for allocating the PRBs to the downlink physical channels of all LTE cells are randomly staggered, so that inter-cell interference can be reduced.

In the embodiment, the above manners are applicable to allocation of the PRBs to the downlink physical channel of the LTE cell based on various allocation manners such as an LVRB allocation manner, a Type0/Type1 allocation manner, and the like. However, when the PRBs are allocated to the downlink physical channel of the LTE cell by following a PRB continuous allocation rule (for example, the LVRB allocation manner is adopted according to the rule), the process of allocating the PRBs to the LTE cell from the determined start position in the embodiment further includes:
when it is determined that N1-K-J<N2, searching for an available PRB segment in a direction from low frequency to high frequency starting from a position of a lowest-frequency PRB, and taking a start position of the downlink resource unit corresponding to a start position of the PRB segment as a new start position for allocating the PRBs to the downlink physical channel of the cell, wherein J is a total number of occupied PRBs.

The random factor generation module, the random number acquisition module, the position determination module and the resource allocation module in the apparatus for resource allocation to an LTE cell provided by the embodiment of the present disclosure, as well as all sub-modules in the random number acquisition module, can be realized by the processor in the base station, or can be realized by a specific logical circuit. In a specific embodiment process, the processor may be a Central Processing Unit (CPU), a Micro Processing Unit (MPU), a Digital Signal Processor (DSP) or a Field-Programmable Gate Array (FPGA).

In the embodiments of the present disclosure, if the method for resource allocation to an LTE cell is realized by a software function module which is sold or used as an independent product, the product can also be stored in a computer readable storage medium. Based on this understanding, the technical solutions of the embodiments of the present disclosure can be substantially embodied in a form of a software product or the parts contributing to the conventional art can be embodied in a form of a software product, and the computer software product is stored in a storage medium, including a plurality of instructions enabling a computer device which may be a personal computer, a server or a network device to execute all or part of the method according to each embodiment of the present disclosure. The storage medium includes various media capable of storing program codes, such as a U disk, a mobile hard disk, a Read Only Memory (ROM), a disk or an optical disc. Thus, the embodiments of the present disclosure are not limited to combination of any specific hardware and software.

Correspondingly, an embodiment of the present disclosure also provides a computer readable storage medium. A computer executable instruction is stored in the computer readable storage medium and is configured to execute the method for resource allocation to an LTE cell provided by each embodiment of the present disclosure.

The above is further detailed descriptions for the present disclosure with reference to the specific embodiments, and it cannot be considered that specific implementations of the present disclosure are only limited to these descriptions. Those skilled in the technical field within which the present disclosure falls can also make simple deductions or replacements without departing from the concept of the present disclosure.

### INDUSTRIAL APPLICABILITY

In the embodiments of the present disclosure, a resource allocation random factor M is generated for an LTE cell based on the cell ID of the LTE cell; a resource allocation random number K is generated using the resource allocation random factor M, the resource allocation random number K being greater than or equal to 0 and being less than or equal to N1-N2, N1 being the total number of PRBs corresponding to the system bandwidth of the LTE system, and N2 being the total number of PRBs needing to be scheduled to the LTE cell currently; the start position for allocating the PRBs to the LTE cell is determined according to the resource allocation random number K; and the PRBs are allocated to the LTE cell from the start position. Thus, according to the embodiments of the present disclosure, a PRB resource is allocated to each LTE cell in a random manner, the probability of overlapping of the PRBs between all LTE cells can be greatly reduced, the probability of mutual interference of adjacent cells is reduced, and the performance of an entire network is improved.

## Claims

1. A method for resource allocation to a Long Term Evolution, LTE, cell, comprising:
generating (101) a resource allocation random factor M for the LTE cell based on a cell identification number, cell ID, of the LTE cell;
generating (102) a resource allocation random number K using the resource allocation random factor M, the resource allocation random number K being greater than or equal to 0 and being less than or equal to N1-N2, wherein N1 is a total number of Physical Resource Blocks, PRBs, corresponding to a system bandwidth of an LTE system, and N2 is a total number of PRBs needing to be scheduled to the LTE cell currently;
determining (103) a start position for allocating PRBs to the LTE cell according to the resource allocation random number K; and
allocating (104) PRBs to the LTE cell from the determined start position.

2. The method for resource allocation to an LTE cell according to claim 1, wherein generating the resource allocation random factor M for the LTE cell based on the cell ID of the LTE cell comprises:
directly taking the cell ID of the LTE cell as the resource allocation random factor M of the LTE cell; or
taking a sum of the cell ID of the LTE cell and a system frame number of the LTE system at a current Transmission Time Interval, TTI, as the resource allocation random factor M of the LTE cell; or
taking a sum of the cell ID of the LTE cell and a system subframe number of the LTE system at the current TTI as the resource allocation random factor M of the LTE cell; or
taking a sum of the cell ID of the LTE cell and the system frame number and system subframe number of the LTE system at the current TTI as the resource allocation random factor M of the LTE cell.

3. The method for resource allocation to an LTE cell according to claim 1 or 2, wherein generating the resource allocation random number K using the resource allocation random factor M comprises:
generating a pseudorandom sequence by taking the resource allocation random factor M as a seed; and
selecting a number from the pseudorandom sequence and taking the selected number as the resource allocation random number K.

4. The method for resource allocation to an LTE cell according to claim 3, wherein when PRBs are allocated to an uplink physical channel of the LTE cell, the resource allocation random number K is a start position for allocating the PRBs to the uplink physical channel of the LTE cell, the total number N1 of PRBs being a total number of PRBs corresponding to an uplink system bandwidth of the LTE system, and the total number N2 of PRBs being a total number of uplink PRBs needing to be scheduled to the LTE cell currently;
correspondingly, a number is selected from the pseudorandom sequence as the resource allocation random number K, K=Rand[M,(0,N1-N2)];
where the Rand[] is a random-number generation function; the Rand[M,(0,N1-N2)] is generating a random number between 0 and N1-N2, and the resource allocation random factor M is taken as a seed for generating a random sequence from which the random number is generated.

5. The method for resource allocation to an LTE cell according to claim 3, wherein when PRBs are allocated to a downlink physical channel of the LTE cell, a position of a downlink resource unit corresponding to a position of a PRB where the resource allocation random number K is located is taken as a start position for allocating downlink PRBs to the LTE cell, where the total number N1 of PRBs being a total number of PRBs corresponding to a downlink system bandwidth of the LTE system, and the total number N2 of PRBs being a total number of downlink PRBs needing to be scheduled to the LTE cell currently;
correspondingly, a number is selected from the pseudorandom sequence as the resource allocation random number K, K=H*floor[Rand(M,(0,N1-N2))/H];
where the floor[]represents rounding down; the Rand() is a random-number generation function; the Rand(M,(0,N1-N2)) is generating a random number between 0 and N1-N2, and the resource allocation random factor M is taken as a seed for generating a random sequence from which the random number is generated, and the H is a size of the downlink resource unit corresponding to the downlink system bandwidth of the LTE system.

6. The method for resource allocation to an LTE cell according to claim 5, wherein when the PRBs are allocated to the downlink physical channel of the LTE cell according to a PRB continuous allocation rule, allocating the PRBs to the LTE cell from the start position further comprises:
when it is determined that N1-K-J<N2, J being a total number of occupied PRBs, searching for an available PRB segment in a direction from low frequency to high frequency starting from a position of a lowest-frequency PRB, and taking a start position of the downlink resource unit corresponding to a start position of the PRB segment as a new start position for allocating the PRBs to the downlink physical channel of the cell.

7. An apparatus for resource allocation to a Long Term Evolution, LTE, cell, comprising: a random factor generation module (601), a random number acquisition module (602), a position determination module (603) and a resource allocation module (604), wherein
the random factor generation module (601) is configured to generate a resource allocation random factor M for the LTE cell based on a cell identification number, cell ID, of the LTE cell;
the random number acquisition module (602) is configured to generate a resource allocation random number K using the resource allocation random factor M, the resource allocation random number K being greater than or equal to 0 and being less than or equal to N1-N2, wherein N1 is a total number of Physical Resource Blocks, PRBs, corresponding to a system bandwidth of an LTE system, and N2 is a total number of PRBs needing to be scheduled to the LTE cell currently;
the position determination module (603) is configured to determine a start position for allocating PRBs to the LTE cell according to the resource allocation random number K; and
the resource allocation module (604) is configured to allocate PRBs to the LTE cell from the determined start position.

8. The apparatus for resource allocation to an LTE cell according to claim 7, wherein the random factor generation module (601) is configured to directly take the cell ID of the LTE cell as the resource allocation random factor M of the LTE cell; or
the random factor generation module (601) is configured to take a sum of the cell ID of the LTE cell and a system frame number of the LTE system at a current Transmission Time Interval, TTI, as the resource allocation random factor M of the LTE cell; or
the random factor generation module (601) is configured to take a sum of the cell ID of the LTE cell and a system subframe number of the LTE system at the current TTI as the obtained resource allocation random factor M of the LTE cell; or
the random factor generation module (601) is configured to take a sum of the cell ID of the LTE cell and the system frame number and system subframe number of the LTE system at the current TTI as the resource allocation random factor M of the LTE cell.

9. The apparatus for resource allocation to an LTE cell according to claim 7 or 8, wherein the random number acquisition module (602) comprises an initialization sub-module (621) and a random number generation sub-module (622), where
the initialization sub-module (621) is configured to generate a pseudorandom sequence by taking the resource allocation random factor M as a seed, and
the random number generation sub-module (622) is configured to select a number from the pseudorandom sequence and take the selected number as the resource allocation random number K.

10. The apparatus for resource allocation to an LTE cell according to claim 9, wherein when PRBs are allocated to an uplink physical channel of the LTE cell, the position determination module (603) is configured to determine the resource allocation random number K as a start position for allocating the PRBs to the uplink physical channel of the LTE cell, the total number N1 of PRBs being a total number of PRBs corresponding to an uplink system bandwidth of the LTE system, and the total number N2 of PRBs being a total number of uplink PRBs needing to be scheduled to the LTE cell currently;
correspondingly, the random number generation sub-module (622) is configured to select a number from the pseudorandom sequence as the resource allocation random number K, K=Rand[M,(0,N1-N2)];
where the Rand[] is a random-number generation function, the Rand[M,(0,N1-N2)] is generating a random number between 0 and N1-N2, and the resource allocation random factor M is taken as a seed for generating a random sequence from which the random number is generated.

11. The apparatus for resource allocation to an LTE cell according to claim 9, wherein when PRBs are allocated to a downlink physical channel of the LTE cell, the position determination module (603) is configured to determine a position of a downlink resource unit corresponding to a position of a PRB where the resource allocation random number K is located as a start position for allocating downlink PRBs to the LTE cell, where the total number N1 of PRBs being a total number of PRBs corresponding to a downlink system bandwidth of the LTE system, and the total number N2 of PRBs being a total number of downlink PRBs needing to be scheduled to the LTE cell currently;
correspondingly, the random number generation sub-module (622) is configured to select a number from the pseudorandom sequence as the resource allocation random number K, K=H*floor[Rand(M,(0,N1-N2))/H];
where the floor[] represents rounding down; the Rand() is a random-number generation function; the Rand(M,(0,N1-N2)) is generating a random number between 0 and N1-N2, and the resource allocation random factor M is taken as a seed for generating a random sequence from which the random number is generated, and the H is a size of the downlink resource unit corresponding to the downlink system bandwidth of the LTE system.

12. The apparatus for resource allocation to an LTE cell according to claim 11, further comprising a judgement module (701), wherein
when the resource allocation module (604) allocates the PRBs to the downlink physical channel of the LTE cell according to a PRB continuous allocation rule, the judgement module (701) is configured to determine that N1-K-J<N2 in a process that the resource allocation module (604) allocates the PRBs to the LTE cell from the start position, J being a total number of occupied PRBs, and search for an available PRB segment in a direction from low frequency to high frequency starting from a position of a lowest-frequency PRB; and
correspondingly, the position determination module (603) is further configured to take a start position of the downlink resource unit corresponding to a start position of the PRB segment as a new start position for allocating the PRBs to the downlink physical channel of the cell.

13. A computer readable storage medium having stored therein computer executable instructions for executing the method for resource allocation to an LTE cell according to any one of claims 1 to 6.

## Patentansprüche

1. Verfahren zur Zuweisung von Ressourcen zu einer LTE (Long Term Evolution)-Zelle, umfassend:
Generieren (101) eines Ressourcenzuweisungszufallsfaktor M für die LTE-Zelle basierend auf einer Zellidentifikationsnummer, Zell-ID, der LTE-Zelle;
Generieren (102) einer Ressourcenzuweisungszufallszahl K unter Verwendung des Ressourcenzuweisungszufallsfaktors M, wobei die Ressourcenzuweisungszufallszahl K größer als oder gleich 0 ist und kleiner als oder gleich N1 - N2 ist, wobei N1 eine Gesamtzahl von physikalischen Ressourcenblöcken, PRBs, ist, die einer Systembandbreite eines LTE-Systems entsprechen, und N2 eine Gesamtzahl von PRBs ist, die gegenwärtig für die LTE-Zelle disponiert werden müssen;
Bestimmen (103) einer Ausgangsposition zum Zuweisen von PRBs zur LTE-Zelle gemäß der Ressourcenzuweisungszufallszahl K; und
Zuweisen (104) von PRBs zur LTE-Zelle aus der bestimmten Ausgangsposition.

2. Verfahren zur Zuweisung von Ressourcen zu einer LTE-Zelle nach Anspruch 1, wobei das Generieren des Ressourcenzuweisungszufallsfaktors M für die LTE-Zelle basierend auf der Zell-ID der LTE-Zelle umfasst:
direktes Nehmen der Zell-ID der LTE-Zelle als den Ressourcenzuweisungszufallsfaktor M der LTE-Zelle; oder
Nehmen einer Summe der Zell-ID der LTE-Zelle und einer Systemrahmennummer des LTE-Systems in einem aktuellen Sendezeitintervall, TTI, als den Ressourcenzuweisungszufallsfaktor M der LTE-Zelle; oder
Nehmen einer Summe der Zell-ID der LTE-Zelle und einer System-Unterrahmennummer des LTE-Systems im aktuellen TTI als den Ressourcenzuweisungszufallsfaktor M der LTE-Zelle; oder
Nehmen einer Summe der Zell-ID der LTE-Zelle und der Systemrahmennummer und der System-Unterrahmennummer des LTE-Systems im aktuellen TTI als den Ressourcenzuweisungszufallsfaktor M der LTE-Zelle.

3. Verfahren zur Zuweisung von Ressourcen zu einer LTE-Zelle nach Anspruch 1 oder 2, wobei das Generieren der Ressourcenzuweisungszufallszahl K unter Verwendung des Ressourcenzuweisungszufallsfaktors M umfasst:
Generieren einer Pseudozufallsfolge durch Nehmen des Ressourcenzuweisungszufallsfaktors M als einen Anfangswert; und
Auswählen einer Zahl aus der Pseudozufallsfolge und Nehmen der ausgewählten Zahl als die Ressourcenzuweisungszufallszahl K.

4. Verfahren zur Zuweisung von Ressourcen zu einer LTE-Zelle nach Anspruch 3, wobei, wenn PRBs zu einem physikalischen Uplink-Kanal der LTE-Zelle zugewiesen werden, die Ressourcenzuweisungszufallszahl K eine Ausgangsposition zum Zuweisen der PRBs zum physikalischen Uplink-Kanal der LTE-Zelle ist, wobei die Gesamtzahl N1 von PRBs eine Gesamtzahl von PRBs ist, die einer Uplink-Systembandbreite des LTE-Systems entsprechen, und die Gesamtzahl N2 von PRBs eine Gesamtzahl von Uplink-PRBs ist, die gegenwärtig für die LTE-Zelle disponiert werden müssen;
dementsprechend eine Zahl aus der Pseudozufallsfolge als die Ressourcenzuweisungszufallszahl K ausgewählt wird, wobei K = Rand[M, (0, N1 - N2)];
wobei Rand[] eine Zufallszahlgenerierungsfunktion ist; Rand[M, (0, N1 - N2)] eine Zufallszahl zwischen 0 und N1 - N2 generiert, und der Ressourcenzuweisungszufallsfaktor M als ein Anfangswert zum Generieren einer Zufallsfolge genommen wird, aus welcher die Zufallszahl generiert wird.

5. Verfahren zur Zuweisung von Ressourcen zu einer LTE-Zelle nach Anspruch 3, wobei, wenn PRBs zu einem physikalischen Downlink-Kanal der LTE-Zelle zugewiesen werden, eine Position einer Downlink-Ressourceneinheit, die einer Position eines PRBs entspricht, in welchem sich die Ressourcenzuweisungszufallszahl K befindet, als eine Ausgangsposition zum Zuweisen von Downlink-PRBs zur LTE-Zelle genommen wird, wobei die Gesamtzahl N1 von PRBs eine Gesamtzahl von PRBs ist, die einer Downlink-Systembandbreite des LTE-Systems entsprechen, und die Gesamtzahl N2 von PRBs eine Gesamtzahl von Downlink-PRBs ist, die gegenwärtig für die LTE-Zelle disponiert werden müssen;
dementsprechend eine Zahl aus der Pseudozufallsfolge als die Ressourcenzuweisungszufallszahl K ausgewählt wird, wobei K, K = H*floor[Rand(M,(0,N1-N2))/H];
wobei floor[] Abrunden darstellt; Rand() eine Zufallszahlgenerierungsfunktion ist; Rand(M, (0, N1 - N2)) eine Zufallszahl zwischen 0 und N1 - N2 generiert, und der Ressourcenzuweisungszufallsfaktor M als ein Anfangswert zum Generieren einer Zufallsfolge genommen wird, aus welcher die Zufallszahl generiert wird, und H eine Größe der Downlink-Ressourceneinheit ist, die der Downlink-Systembandbreite des LTE-Systems entspricht.

6. Verfahren zur Zuweisung von Ressourcen zu einer LTE-Zelle nach Anspruch 5, wobei, wenn die PRBs gemäß einer Regel zur kontinuierlichen Zuweisung von PBRs zum physikalischen Downlink-Kanal der LTE-Zelle zugewiesen werden, das Zuweisen der PRBs zur LTE-Zelle aus der Ausgangsposition ferner umfasst:
Suchen, wenn bestimmt wird, dass N1 - K - J < N2, wobei J eine Gesamtzahl von belegten PRBs ist, nach einem verfügbaren PRB-Segment in einer Richtung von niedriger Frequenz zu hoher Frequenz ausgehend von einer Position eines PRBs mit der niedrigsten Frequenz und Nehmen einer Ausgangsposition der Downlink-Ressourceneinheit, die einer Ausgangsposition des PRB-Segments entspricht, als eine neue Ausgangsposition zum Zuweisen der PRBs zum physikalischen Downlink-Kanal der Zelle.

7. Vorrichtung zur Zuweisung von Ressourcen zu einer LTE (Long Term Evolution)-Zelle, umfassend: einen Zufallsfaktorgenerierungsmodul (601), ein Zufallszahlakquirierungsmodul (602), ein Positionsbestimmungsmodul (603) und ein Ressourcenzuweisungsmodul (604), wobei
das Zufallsfaktorgenerierungsmodul (601) zum Generieren eines Ressourcenzuweisungszufallsfaktor M für die LTE-Zelle basierend auf einer Zellidentifikationsnummer, Zell-ID, der LTE-Zelle konfiguriert ist;
das Zufallszahlakquirierungsmodul (602) zum Generieren einer Ressourcenzuweisungszufallszahl K unter Verwendung des Ressourcenzuweisungszufallsfaktors M konfiguriert ist, wobei die Ressourcenzuweisungszufallszahl K größer als oder gleich 0 ist und kleiner als oder gleich N1 - N2 ist, wobei N1 eine Gesamtzahl von physikalischen Ressourcenblöcken, PRBs, ist, die einer Systembandbreite eines LTE-Systems entsprechen, und N2 eine Gesamtzahl von PRBs ist, die gegenwärtig für die LTE-Zelle disponiert werden müssen;
das Positionsbestimmungsmodul (603) zum Bestimmen einer Ausgangsposition zum Zuweisen von PRBs zur LTE-Zelle gemäß der Ressourcenzuweisungszufallszahl K konfiguriert ist; und
das Ressourcenzuweisungsmodul (604) zum Zuweisen von PRBs zur LTE-Zelle aus der bestimmten Ausgangsposition konfiguriert ist.

8. Vorrichtung zur Zuweisung von Ressourcen zu einer LTE-Zelle nach Anspruch 7, wobei das Zufallsfaktorgenerierungsmodul (601) zum direkten Nehmen der Zell-ID der LTE-Zelle als den Ressourcenzuweisungszufallsfaktor M der LTE-Zelle konfiguriert ist; oder
das Zufallsfaktorgenerierungsmodul (601) zum Nehmen einer Summe der Zell-ID der LTE-Zelle und einer Systemrahmennummer des LTE-Systems in einem aktuellen Sendezeitintervall, TTI, als den Ressourcenzuweisungszufallsfaktor M der LTE-Zelle konfiguriert ist; oder
das Zufallsfaktorgenerierungsmodul (601) zum Nehmen einer Summe der Zell-ID der LTE-Zelle und einer System-Unterrahmennummer des LTE-Systems im aktuellen TTI als den Ressourcenzuweisungszufallsfaktor M der LTE-Zelle konfiguriert ist; oder
das Zufallsfaktorgenerierungsmodul (601) zum Nehmen einer Summe der Zell-ID der LTE-Zelle und der Systemrahmennummer und der System-Unterrahmennummer des LTE-Systems im aktuellen TTI als den Ressourcenzuweisungszufallsfaktor M der LTE-Zelle konfiguriert ist.

9. Vorrichtung zur Zuweisung von Ressourcen zu einer LTE-Zelle nach Anspruch 7 oder 8, wobei das Zufallszahlakquirierungsmodul (602) ein Initialisierungssubmodul (621) und ein Zufallszahlgenerierungssubmodul (622) umfasst, wobei
das Initialisierungssubmodul (621) zum Generieren einer Pseudozufallsfolge durch Nehmen des Ressourcenzuweisungszufallsfaktors M als einen Anfangswert konfiguriert ist, und
das Zufallszahlgenerierungssubmodul (622) zum Auswählen einer Zahl aus der Pseudozufallsfolge und Nehmen der ausgewählten Zahl als die Ressourcenzuweisungszufallszahl K konfiguriert ist.

10. Vorrichtung zur Zuweisung von Ressourcen zu einer LTE-Zelle nach Anspruch 9, wobei das Positionsbestimmungsmodul (603) so konfiguriert ist, dass es, wenn PRBs zu einem physikalischen Uplink-Kanal der LTE-Zelle zugewiesen werden, die Ressourcenzuweisungszufallszahl K als eine Ausgangsposition zum Zuweisen der PRBs zum physikalischen Uplink-Kanal der LTE-Zelle bestimmt, wobei die Gesamtzahl N1 von PRBs eine Gesamtzahl von PRBs ist, die einer Uplink-Systembandbreite des LTE-Systems entsprechen, und die Gesamtzahl N2 von PRBs eine Gesamtzahl von Uplink-PRBs ist, die gegenwärtig für die LTE-Zelle disponiert werden müssen;
das Zufallszahlgenerierungssubmodul (622) dementsprechend zum Auswählen einer Zahl aus der Pseudozufallsfolge als die Ressourcenzuweisungszufallszahl K konfiguriert ist, wobei K = Rand[M, (0, N1 - N2)];
wobei Rand[] eine Zufallszahlgenerierungsfunktion ist, Rand[M, (0, N1 - N2)] eine Zufallszahl zwischen 0 und N1 - N2 generiert, und der Ressourcenzuweisungszufallsfaktor M als ein Anfangswert zum Generieren einer Zufallsfolge genommen wird, aus welcher die Zufallszahl generiert wird.

11. Vorrichtung zur Zuweisung von Ressourcen zu einer LTE-Zelle nach Anspruch 9, wobei das Positionsbestimmungsmodul (603) so konfiguriert ist, dass es, wenn PRBs zu einem physikalischen Downlink-Kanal der LTE-Zelle zugewiesen werden, eine Position einer Downlink-Ressourceneinheit, die einer Position eines PRBs entspricht, in welchem sich die Ressourcenzuweisungszufallszahl K befindet, als eine Ausgangsposition zum Zuweisen von Downlink-PRBs zur LTE-Zelle bestimmt, wobei die Gesamtzahl N1 von PRBs eine Gesamtzahl von PRBs ist, die einer Downlink-Systembandbreite des LTE-Systems entsprechen, und die Gesamtzahl N2 von PRBs eine Gesamtzahl von Downlink-PRBs ist, die gegenwärtig für die LTE-Zelle disponiert werden müssen;
das Zufallszahlgenerierungssubmodul (622) dementsprechend zum Auswählen einer Zahl aus der Pseudozufallsfolge als die Ressourcenzuweisungszufallszahl K konfiguriert ist, wobei K = H*floor[Rand(M, (0, N1 - N2))/H];
wobei floor[] Abrunden darstellt; Rand() eine Zufallszahlgenerierungsfunktion ist; Rand(M, (0, N1 - N2)) eine Zufallszahl zwischen 0 und N1 - N2 generiert, und der Ressourcenzuweisungszufallsfaktor M als ein Anfangswert zum Generieren einer Zufallsfolge genommen wird, aus welcher die Zufallszahl generiert wird, und H eine Größe der Downlink-Ressourceneinheit ist, die der Downlink-Systembandbreite des LTE-Systems entspricht.

12. Vorrichtung zur Zuweisung von Ressourcen zu einer LTE-Zelle nach Anspruch 11, ferner umfassend ein Beurteilungsmodul (701), wobei
das Beurteilungsmodul (701) so konfiguriert ist, dass es, wenn das Ressourcenzuweisungsmodul (604) die PRBs gemäß einer Regel zur kontinuierlichen Zuweisung von PRBs zum physikalischen Downlink-Kanal der LTE-Zelle zuweist, bestimmt, dass in einem Prozess, in welchem das Ressourcenzuweisungsmodul (604) die PRBs aus der Ausgangsposition zuweist, N1 - K - J < N2 ist, wobei J eine Gesamtzahl von belegten PRBs ist, und nach einem verfügbaren PRB-Segment in einer Richtung von niedriger Frequenz zu hoher Frequenz ausgehend von einer Position eines PRBs mit der niedrigsten Frequenz sucht; und
das Positionsbestimmungsmodul (603) dementsprechend ferner so konfiguriert ist, das es eine Ausgangsposition der Downlink-Ressourceneinheit, die einer Ausgangsposition des PRB-Segments entspricht, als eine neue Ausgangsposition zum Zuweisen der PRBs zum physikalischen Downlink-Kanal der Zelle nimmt.

13. Computerlesbares Speichermedium mit darauf gespeicherten computerausführbaren Anweisungen zum Ausführen des Verfahrens zur Zuweisung von Ressourcen zu einer LTE-Zelle nach einem der Ansprüche 1 bis 6.

## Revendications

1. Procédé d'attribution de ressources à une cellule de technologie d'évolution à long terme, LTE, comprenant les étapes ci-dessous consistant à :
générer (101) un facteur aléatoire d'attribution de ressources « M » pour la cellule LTE, sur la base d'un numéro d'identification de cellule, appelé « ID de cellule », de la cellule LTE ;
générer (102) un nombre aléatoire d'attribution de ressources « K » en utilisant le facteur aléatoire d'attribution de ressources « M », le nombre aléatoire d'attribution de ressources « K » étant supérieur ou égal à « 0 » et inférieur ou égal à « N1-N2 », où « N1 » est un nombre total de blocs de ressources physiques, PRB, correspondant à une largeur de bande de système d'un système LTE, et « N2 » est un nombre total de blocs PRB devant être actuellement planifiés pour la cellule LTE ;
déterminer (103) une position de départ pour attribuer des blocs PRB à la cellule LTE selon le nombre aléatoire d'attribution de ressources « K » ; et
attribuer (104) des blocs PRB à la cellule LTE à partir de la position de départ déterminée.

2. Procédé d'attribution de ressources à une cellule LTE selon la revendication 1, dans lequel l'étape de génération du facteur aléatoire d'attribution de ressources « M » pour la cellule LTE, sur la base de l'ID de cellule de la cellule LTE, comprend les étapes ci-dessous consistant à :
prendre directement l'ID de cellule de la cellule LTE comme facteur aléatoire d'attribution de ressources « M » de la cellule LTE ; ou
prendre une somme de l'ID de cellule de la cellule LTE et d'un numéro de trame de système du système LTE à un intervalle de temps de transmission, TTI, en cours, comme facteur aléatoire d'attribution de ressources « M » de la cellule LTE ; ou
prendre une somme de l'ID de cellule de la cellule LTE et d'un numéro de sous-trame de système du système LTE à l'intervalle TTI en cours en comme facteur aléatoire d'attribution de ressources « M » de la cellule LTE ; ou
prendre une somme de l'ID de cellule de la cellule LTE et du numéro de trame de système et du numéro de sous-trame de système du système LTE, à l'intervalle TTI en cours, comme facteur aléatoire d'attribution de ressources « M » de la cellule LTE.

3. Procédé d'attribution de ressources à une cellule LTE selon la revendication 1 ou 2, dans lequel l'étape de génération du nombre aléatoire d'attribution de ressources « K » en utilisant le facteur aléatoire d'attribution de ressources « M » comprend les étapes ci-dessous consistant à :
générer une séquence pseudo-aléatoire en prenant le facteur aléatoire d'attribution de ressources « M » comme une valeur initiale ; et
sélectionner un nombre à partir de la séquence pseudo-aléatoire et prendre le nombre sélectionné comme nombre aléatoire d'attribution de ressources « K ».

4. Procédé d'attribution de ressources à une cellule LTE selon la revendication 3, dans lequel, lorsque des blocs PRB sont attribués à un canal physique de liaison montante de la cellule LTE, le nombre aléatoire d'attribution de ressources « K » est une position de départ pour attribuer les blocs PRB au canal physique de liaison montante de la cellule LTE, le nombre total « N1 » de blocs PRB étant un nombre total de blocs PRB correspondant à une largeur de bande de système en liaison montante du système LTE, et le nombre total « N2 » de blocs PRB étant un nombre total de blocs PRB de liaison montante devant être actuellement planifiés pour la cellule LTE ;
dans lequel, en conséquence, un nombre est sélectionné à partir de la séquence pseudo-aléatoire en tant que le nombre aléatoire d'attribution de ressources « K », K = Rand[M,(0,N1-N2)] ;
où « Rand[] » est une fonction de génération de nombre aléatoire ; « Rand[M,(0,N1-N2)] » génère un nombre aléatoire compris entre « 0 » et « N1-N2 », et le facteur aléatoire d'attribution de ressources « M » est pris en tant qu'une graine, autrement dit une valeur initiale, pour générer une séquence aléatoire à partir de laquelle le nombre aléatoire est généré.

5. Procédé d'attribution de ressources à une cellule LTE selon la revendication 3, dans lequel, lorsque des blocs PRB sont attribués à un canal physique de liaison descendante de la cellule LTE, une position d'une unité de ressource de liaison descendante, correspondant à une position d'un bloc PRB où le nombre aléatoire d'attribution de ressources « K » est situé, est comme position de départ pour attribuer des blocs PRB de liaison descendante à la cellule LTE, où le nombre total « N1 » de blocs PRB est un nombre total de blocs PRB correspondant à une largeur de bande de système en liaison descendante du système LTE, et le nombre total « N2 » de blocs PRB est un nombre total de blocs PRB de liaison descendante devant être actuellement planifiés pour la cellule LTE ;
dans lequel, en conséquence, un nombre est sélectionné à partir de la séquence pseudo-aléatoire en tant que le nombre aléatoire d'attribution de ressources « K », K = H*floor[Rand(M,(0,N1-N2)]/H] ;
où « floor[] » représente un arrondi par défaut ; « Rand() » est une fonction de génération de nombre aléatoire ; « Rand(M,(0,N1-N2)) » génère un nombre aléatoire compris entre « 0 » et « N1-N2 », et le facteur aléatoire d'attribution de ressources « M » est pris comme une valeur initiale pour générer une séquence aléatoire à partir de laquelle le nombre aléatoire est généré, et « H » est une taille de l'unité de ressource de liaison descendante correspondant à la largeur de bande de système en liaison descendante du système LTE.

6. Procédé d'attribution de ressources à une cellule LTE selon la revendication 5, dans lequel, lorsque les blocs PRB sont attribués au canal physique de liaison descendante de la cellule LTE selon une règle d'attribution en continu de blocs PRB, l'étape d'attribution des blocs PRB à la cellule LTE à partir de la position de départ comprend en outre les étapes ci-dessous consistant à :
lorsqu'il est déterminé que N1-K-J < N2, « J » étant un nombre total de blocs PRB occupés, rechercher un segment de bloc PRB disponible, dans une direction de basse fréquence à haute fréquence, à partir d'une position d'un bloc PRB de plus basse fréquence, et prendre une position de départ de l'unité de ressource de liaison descendante correspondant à une position de départ du segment de bloc PRB en tant qu'une nouvelle position de départ pour attribuer les blocs PRB au canal physique de liaison descendante de la cellule.

7. Appareil pour une attribution de ressources à une cellule de technologie d'évolution à long terme, LTE, comprenant : un module de génération de facteur aléatoire (601), un module d'acquisition de nombre aléatoire (602), un module de détermination de position (603) et un module d'attribution de ressources (604), dans lequel :
le module de génération de facteur aléatoire (601) est configuré de manière à générer un facteur aléatoire d'attribution de ressources « M » pour la cellule LTE, sur la base d'un numéro d'identification de cellule, appelé « ID de cellule », de la cellule LTE ;
le module d'acquisition de nombre aléatoire (602) est configuré de manière à générer un nombre aléatoire d'attribution de ressources « K » en utilisant le facteur aléatoire d'attribution de ressources « M », le nombre aléatoire d'attribution de ressources « K » étant supérieur ou égal à « 0 » et inférieur ou égal à « N1-N2 », où « N1 » est un nombre total de blocs de ressources physiques, PRB, correspondant à une largeur de bande de système d'un système LTE, et « N2 » est un nombre total de blocs PRB devant être actuellement planifiés pour la cellule LTE ;
le module de détermination de position (603) est configuré de manière à déterminer une position de départ pour attribuer des blocs PRB à la cellule LTE selon le nombre aléatoire d'attribution de ressources « K » ; et
le module d'attribution de ressources (604) est configuré de manière à attribuer des blocs PRB à la cellule LTE à partir de la position de départ déterminée.

8. Appareil pour une attribution de ressources à une cellule LTE selon la revendication 7, dans lequel le module de génération de facteur aléatoire (601) est configuré de manière à prendre directement l'ID de cellule de la cellule LTE comme facteur aléatoire d'attribution de ressources « M » de la cellule LTE ; ou
le module de génération de facteur aléatoire (601) est configuré de manière à prendre une somme de l'ID de cellule de la cellule LTE et d'un numéro de trame de système du système LTE à un intervalle de temps de transmission, TTI, en cours, comme facteur aléatoire d'attribution de ressources « M » de la cellule LTE ; ou
le module de génération de facteur aléatoire (601) est configuré de manière à prendre une somme de l'ID de cellule de la cellule LTE et d'un numéro de sous-trame de système du système LTE à l'intervalle TTI en cours comme facteur aléatoire d'attribution de ressources « M » obtenu de la cellule LTE ; ou
le module de génération de facteur aléatoire (601) est configuré de manière à prendre une somme de l'ID de cellule de la cellule LTE et du numéro de trame de système et du numéro de sous-trame de système du système LTE, à l'intervalle TTI en cours, en tant que le facteur aléatoire d'attribution de ressources « M » de la cellule LTE.

9. Appareil pour une attribution de ressources à une cellule LTE selon la revendication 7 ou 8, dans lequel le module d'acquisition de nombre aléatoire (602) comprend un sous-module d'initialisation (621) et un sous-module de génération de nombre aléatoire (622), où :
le sous-module d'initialisation (621) est configuré de manière à générer une séquence pseudo-aléatoire en prenant le facteur aléatoire d'attribution de ressources « M » en tant qu'une graine, autrement dit une valeur initiale ; et
le sous-module de génération de nombre aléatoire (622) est configuré de manière à sélectionner un nombre à partir de la séquence pseudo-aléatoire et à prendre le nombre sélectionné en tant que le nombre aléatoire d'attribution de ressources « K ».

10. Appareil pour une attribution de ressources à une cellule LTE selon la revendication 9, dans lequel, lorsque des blocs PRB sont attribués à un canal physique de liaison montante de la cellule LTE, le module de détermination de position (603) est configuré de manière à déterminer le nombre aléatoire d'attribution de ressources « K » en tant qu'une position de départ pour attribuer les blocs PRB au canal physique de liaison montante de la cellule LTE, le nombre total « N1 » de blocs PRB étant un nombre total de blocs PRB correspondant à une largeur de bande de système en liaison montante du système LTE, et le nombre total « N2 » de blocs PRB étant un nombre total de blocs PRB de liaison montante devant être actuellement planifiés pour la cellule LTE ;
dans lequel, en conséquence, le sous-module de génération de nombre aléatoire (622) est configuré de manière à sélectionner un nombre à partir de la séquence pseudo-aléatoire en tant que le nombre aléatoire d'attribution de ressources « K », K = Rand[M,(0,N1-N2)] ;
où « Rand[] » est une fonction de génération de nombre aléatoire ; « Rand[M,(0,N1-N2)] » génère un nombre aléatoire compris entre « 0 » et « N1-N2 », et le facteur aléatoire d'attribution de ressources « M » est pris en tant qu'une valeur initiale pour générer une séquence aléatoire à partir de laquelle le nombre aléatoire est généré.

11. Appareil pour une attribution de ressources à une cellule LTE selon la revendication 9, dans lequel, lorsque des blocs PRB sont attribués à un canal physique de liaison descendante de la cellule LTE, le module de détermination de position (603) est configuré de manière à déterminer une position d'une unité de ressource de liaison descendante, correspondant à une position d'un bloc PRB où le nombre aléatoire d'attribution de ressources « K » est situé, en tant qu'une position de départ pour attribuer des blocs PRB de liaison descendante à la cellule LTE, où le nombre total « N1 » de blocs PRB est un nombre total de blocs PRB correspondant à une largeur de bande de système en liaison descendante du système LTE, et le nombre total « N2 » de blocs PRB est un nombre total de blocs PRB de liaison descendante devant être actuellement planifiés pour la cellule LTE ;
dans lequel, en conséquence, le sous-module de génération de nombre aléatoire (622) est configuré de manière à sélectionner un nombre à partir de la séquence pseudo-aléatoire, en tant que le nombre aléatoire d'attribution de ressources « K », K = H*floor[Rand(M,(0,N1-N2)]/H] ;
où « floor[] » représente un arrondi par défaut ; « Rand() » est une fonction de génération de nombre aléatoire ; « Rand(M,(0,N1-N2)) » génère un nombre aléatoire compris entre « 0 » et « N1-N2 », et le facteur aléatoire d'attribution de ressources « M » est pris comme une valeur initiale pour générer une séquence aléatoire à partir de laquelle le nombre aléatoire est généré, et « H » est une taille de l'unité de ressource de liaison descendante correspondant à la largeur de bande de système en liaison descendante du système LTE.

12. Appareil pour une attribution de ressources à une cellule LTE selon la revendication 11, comprenant en outre un module de détermination (701), dans lequel :
lorsque le module d'attribution de ressources (604) attribue les blocs PRB au canal physique de liaison descendante de la cellule LTE selon une règle d'attribution en continu de blocs PRB, le module de détermination (701) est configuré de manière à déterminer que N1-K-J-J < N2, dans un processus dans lequel le module d'attribution de ressources (604) attribue les blocs PRB à la cellule LTE, à partir de la position de départ, « J » étant un nombre total de blocs PRB occupés, et à rechercher un segment de bloc PRB disponible, dans une direction de basse fréquence à haute fréquence, à partir d'une position d'un bloc PRB de plus basse fréquence ; et
dans lequel, en conséquence, le module de détermination de position (603) est en outre configuré de manière à prendre une position de départ de l'unité de ressource de liaison descendante correspondant à une position de départ du segment de bloc PRB en tant qu'une nouvelle position de départ pour attribuer les blocs PRB au canal physique de liaison descendante de la cellule.

13. Support de stockage lisible par ordinateur dans lequel sont stockées des instructions exécutables par ordinateur pour exécuter le procédé d'attribution de ressources à une cellule LTE selon l'une quelconque des revendications 1 à 6.
